# EUROPEAN PATENT SPECIFICATION

(11) **EP 1 582 264 B1**
(45) Date of publication and mention of the grant of the patent: **24.08.2011**
(21) Application number: 04251969.4
(22) Date of filing: 01.04.2004
(51) Int. Cl.: B05B 1/30, F16K 15/02

(54) **Check valve**
Rückschlagventil
Valve anti-retour

(43) Date of publication of application: 05.10.2005
(73) Proprietor: Spray Nozzle Engineering Pty. Limited, Mentone, VIC 3193 (AU)
(72) Inventor: Morgan Sean, Mentone VIC 3194 (AU); Morgan Stuart, Mentone VIC 3194 (AU)
(74) Representative: Merrifield, Sarah Elizabeth

(56) References cited:
- WO-A-96/01666
- US-A- 2 279 002
- US-A- 2 556 050
- US-E- R E35 744

## Description

### Area of the Invention

This invention relates to a check valve which is specifically adapted to be used with spray drying nozzles, but could also be used in association with other nozzles.

### Background to the Invention

For ease of description, we shall refer to the valve when associated with spray drying of milk.

Spray drying techniques are well known and in these milk is sprayed through nozzles into a chamber where the liquid part of the milk is evaporated away and milk powder either falls to the floor of the chamber and is removed therefrom.

Historically, on completion of operation the spray drying industry simply stopped pumping the liquid through the nozzles and as the pressure dropped, a certain percentage of the liquid simply fell as drops from the nozzles, without being atomized, and this material could well lead to pollution of the product in the chamber.

Check valves have been proposed but in practice have suffered from major disadvantages.

A first such disadvantage is that the valves caused a limitation in liquid flow therethrough and there was a large pressure drop over the valve. This meant that in order to operate a plant to capacity, it was either necessary to use higher pressures or larger diameter pipes and valves to enable the optimum flow through the nozzles.

The second disadvantage was that these valves normally had a soft seal, such as an O-ring and it was found, in practice, that this seal could be destroyed during use which would enable parts of the O-ring to pass to the chamber, again polluting the product.

In fact most of these check valves have had a complex design which requires the use of many seals and multiple sealing points. As a result there are many stagnant points such that milk products can build up and, if overheated, catch fire. Additionally soft seals are prone to failure and consequent leakage. As such check valves are generally welded together any repairs are extremely difficult.

Other check valves have used metal to metal seals which increases the wear rate and as discussed above access for repair is difficult in conventional valves. According to the features of the preamble of claim 1, US E35,744 describes a valve for a discharge nozzle assembly for use with a trigger sprayer. The apparatus includes a primer valve which controls the flow of fluid from the fluid container as it passes towards the discharge orifice. A compression spring urges the primer valve into a valve seat, through which the fluid must move in its passage towards the orifice. When the sprayer is not in use, the sealing of the valve seat by the priming valve prevents fluid from leaking out of the discharge orifice.

In WO96/01666 there is described a spray head which has at least one nozzle having a large nozzle opening which is closed by a spindle loaded with a spring.

An additional disadvantage with previous check valves is that as fluid flow is not necessarily smooth through them and stagnant deposits can form they are difficult to keep clean.

### Outline of the Invention

An object of the invention is to provide a check valve for spray drying nozzles, and other nozzles, which causes little restriction in the flow through the nozzle but which, at the same time, does not have any parts which are likely to be passed into the fluid stream.

A further object of the invention is to provide such a check valve which can remain in situ while the system is cleaned and which can also permit interchange of nozzles without the valve itself being disturbed. Another object of the invention is to provide such a valve which is easily cleaned.

The invention therefore provides a check valve for a spray nozzle assembly comprising a body adapted at one end to receive a liquid source and at the other end to engage with a spray nozzle of a spring nozzle assembly and having a bore therethrough, said bore having a first section adjacent the upstream end of the body said first section having a smaller diameter than a second downstream section such that a valve seat is provided at the junction of these sections, a valve assembly located generally in the second section and having a valve member having a generally curved end directed towards the seat and bias means to normally hold the member against the seat until the pressure at the inlet reaches a pre-determined minimum, characterized said check valve in that further comprises a releasable retaining means located about the bias means which retains the check valve assembly within its body such that a unitary check valve is provided, whereby, in use, of the check valve in a spray nozzle assembly the check valve can be removed from the spray nozzle without disrupting the check valve.

It is preferred that the curved end of the valve member be either generally hemispherical or conical in shape.

It is also preferred that the curved end of the valve member be manufactured from some sacrificial material and that this end form a seal with the valve seat when the valve is closed.

It is further preferred that the valve member be provided with guide means to locate it axially within the annular recess such that liquid can flow around the valve member when the valve is in its open position and that this guide means preferably be adjacent the curved end of the valve member.

It is further preferred that this guide means have a plurality of arms extending from an axial portion to the sides of the first bore component such that fluid flow is relatively unimpeded over it.

It is also preferred that the bias means be a spring and that engagement between the valve and spray nozzle is effected using bayonet fittings or screw means.

In order that the invention may be more readily understood we shall describe by way of non limiting example one particular embodiment of the invention with reference to the accompanying drawings.

### Brief Description of the Drawing Figures

- Fig. 1: shows the check valve connected to an associated spray nozzle;
- Fig. 2: shows an exploded diagram of the assembly shown in Figure 1;
- Fig. 3: shows a cross section through the body of the valve;
- Fig. 4: shows a sectional view of a check valve associated with an air atomising nozzle;

### Description of an Embodiment of the Invention

The check valve body 10 can be considered to be generally cylindrical with a central bore 11 and may be made of any metal suitable for the purpose to which it is to be put.

At the upstream end 12, the bore is adapted to be connected to a supply pipe for the liquid passing through the nozzle, in this case, this will be considered to be milk.

Suitable sealing means may be provided between the pipe and the valve body which could include an O-ring or the like in an annular groove in either the body, the pipe end or both.

In this embodiment of the invention the other end of the body 14 is threaded 15 to engage with a nozzle body 20 having a corresponding screw thread arrangement. The nozzle body 20 is adapted to receive an orifice disc which causes the atomisation of the milk as it passes therethrough.

In another embodiment of the invention the end 14 of the body 10 may have a bayonet type fitting over which a nozzle body having a corresponding bayonet arrangement is fitted. The precise form of connection not being restricted in the invention.

The screw fitting enables ready disassembly of the nozzle for cleaning and/or maintenance and, as will be seen from the description hereafter, without disturbing the check valve.

The central bore 11 located in the valve body has two components namely a first annular bore 16 and, partway along the length thereof, a second annular bore 17 having a larger diameter than that of bore 16.

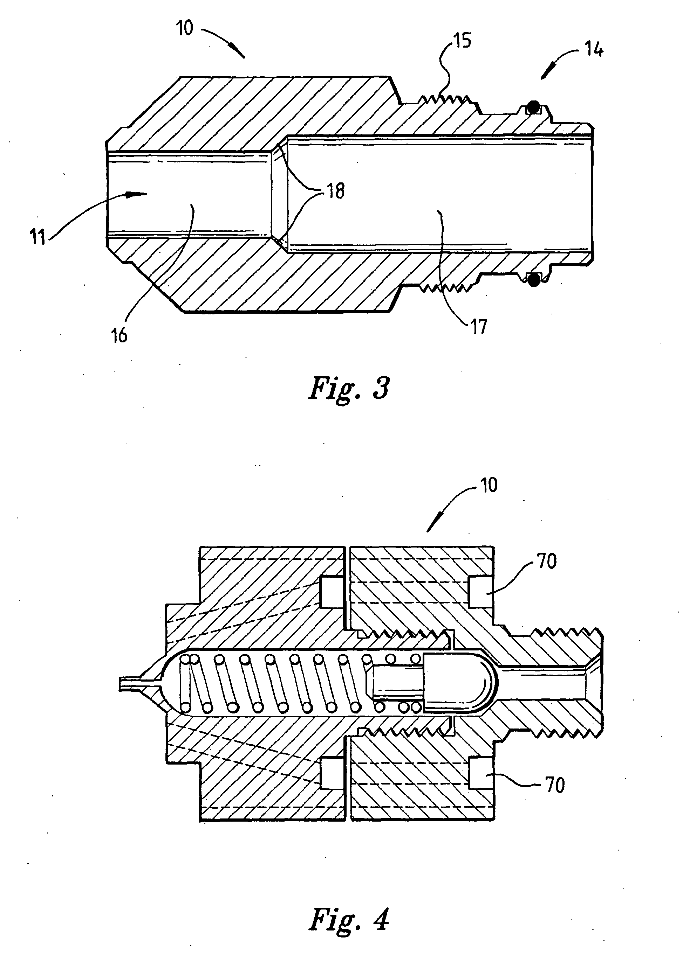

The junction between bores 16 and 17 body provides a valve seat 18 which as shown in Figure 3 slopes towards the smaller bore 16.

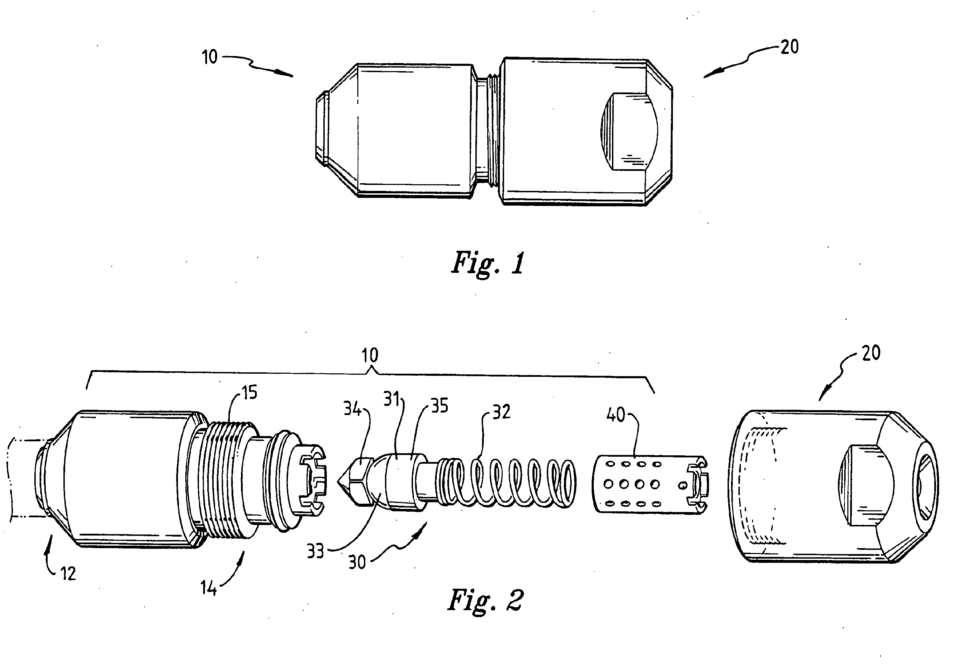

A valve assembly 30 as shown in Figure 2 has a valve member 31 on the upstream side thereof and which has a diameter smaller than the diameter of bore 17 and this has a portion 35 directed towards the nozzle with which a spring 32 may be associated which spring can abut a further annulus adjacent the downstream end of the nozzle and act against an annular portion of the valve assembly so as to normally bias the valve member 31 towards the valve seat 18.

In this embodiment of the invention the valve and spring assembly are located in a perforated tube 40 which acts as the spring retainer and which, in turn, can be fitted within the valve body 10. The tube 40 acts to hold spring 32 in compression and is provided with retaining means which is a bayonet fitting such that the check valve assembly remains assembled when disconnected from the spray nozzle. This arrangement causes the components of the check valve to be housed in its body in an integral fashion such that the spray nozzle can be serviced without interfering with the check valve.

If access to the check valve is required it can be disconnected from the spray nozzle and the retaining tube 40 released by releasing its bayonet fitting which in turn causes the spring to no longer be in compression such that the valve member assembly can be removed.

The valve member may be made of any required material but in this embodiment of the invention it includes a metal body 31 and metal generally triangular guide member 34 between a hemispheric component 33 which is of a synthetic plastics material such as PTFE or some other engineering grade plastic which can be machined or moulded.

The guide member 34 consists of a plurality of arms, preferably 3, which extend from a central portion to the sides of bore 16 and therefore provide little obstruction to fluid flow. In fact the pressure drop across the check valve is kept to a minimum by the fluid path passing from the downstream end of the valve member, through the perforations in the retaining means and through the spring to be directed down the middle of the spray nozzle in a straight path.

This component 33 seats in valve seat 18 when the valve is closed when fluid pressure upon the valve member is reduced and is of a sacrificial material compared with the metal valve seat 18. It is also possible to replace the valve member without having to machine the seat.

By use of a sacrificial material seated into a metal seat a good seal can be maintained without the use of soft O-rings which may otherwise break down and act as contaminants to the fluid being sprayed.

The component 33 described here is generally hemispherical and is adapted to seat in the truncatedly conical valve seat 18. In another embodiment of the invention it may be preferred that this valve component 33 be conical in form.

In operation, when there is no pressure in the milk line, the valve member abuts the seat and provides a good seal therebetween preventing any liquid in the line from passing through the nozzle.

When the pressure in the line increases to a pressure which would be sufficient for the nozzle to operate correctly, the valve body is caused to move against the spring towards the nozzle. Guide means 34 permits fluid flow past it and maintains the valve assembly 30 coaxially within bore 11.

In this way the amount of restriction presented to the fluid passing through the valve body is not great and the efficiency of the nozzle is not degraded to a degree sufficiently substantial to adversely effect the operation of the nozzle.

When the pressure in the line drops, the valve member moves towards the upstream end until the valve contacts the seat and further liquid is prevented from passing to the nozzle and thus to the product being treated.

This means there is no likelihood of the product being polluted by material which has a drop size very much greater than the normal atomised drops from the nozzle from which the liquid evaporates in the chamber.

Also the arrangement is such that the nozzle body can readily be removed by operation screw fitting for cleaning or replacement of the orifice disc without, in any way, adversely effecting the check valve.

Also cleaning and maintenance can be effected with the check valve in situ so the existence of this valve does not increase the time taken for normal maintenance tasks.

Whilst we have, in this specification, described one particular mechanical arrangement of the valve, it will be understood that other forms, which operate in the same manner as that described, can readily be utilised in the invention.

A further example of the check valve of the invention is shown in Figure 4 and shows the check valve of the invention when used in association with an air atomising nozzle. The operation of the valve is essentially the same as previously described however air passages 70 are present in the assembly as shown and the air aids in the break up of the fluid by air atomisation.

In addition it is to be understood that whilst the valve is particularly useful in spray drying milk it can readily be used in other applications where it is undesirable that product passes through the nozzle other than under full pressure and being atomised.

## Claims

1. A check valve (10) for a spray nozzle assembly comprising a body (14) adapted at one end (12) to receive a liquid source and at the other end to engage with a spray nozzle (20) of a spray nozzle assembly and having a bore (11) therethrough, said bore (11) having a first section (16) adjacent the upstream end of the body (14), said first section (16) having a smaller diameter than a second downstream section (17) such that a valve seat (18) is provided at the junction of these sections, a valve assembly (30) located generally in the second section (17) and having a valve member (31) having a generally curved end (33) directed towards the seat (18) and bias means (32) to normally hold the member (31) against the seat (18) until the pressure at the inlet reaches a pre-determined minimum, **characterized in that** said check valve (10) further comprises a releasable retaining means located about the bias means (32) which retains the check valve assembly (30) within its body (14) such that a unitary check valve is provided, whereby, in use of the check valve (10) in a spray nozzle assembly, the check valve (10) can be removed from the spray nozzle without disrupting the check valve (10).

2. A check valve (10) as claimed in claim 1 wherein the curved end (33) of the valve member (31) is generally hemispherical in shape.

3. A check valve (10) as claimed in claim 1 wherein the curved end (33) of the valve member (31) is generally conical in shape.

4. A check valve (10) as claimed in any one of claims 1 to 3 wherein the curved end (33) of the valve member (31) is manufactured from a sacrificial material and forms a seal with the valve seat (18) when the valve (10) is closed.

5. A check valve (10) as claimed in claim 4 wherein the valve seat (16) has the shape of a truncated cone.

6. A check valve (10) as claimed in any one of claims 1 to 4 wherein the valve member (31) is provided with guide means (34) to locate it axially within the bore.

7. A check valve (10) as claimed in claim 6 wherein the guide means (34) is positioned upstream of and adjacent to the curved end (32) of the valve member (31).

8. A check valve (10) as claimed in claim 7 wherein the guide means (34) includes a plurality of arm members extending between an axial component of the guide means to abut a surface of the first bore member (16) such that fluid flow over the guide means (34) is minimally obstructed.

9. A check valve (10) as claimed in any one claims 1 to 8 wherein the bias means (32) is a spring.

10. A check valve (10) as claimed in claim 9 wherein a releasable retaining means (40) is provided which retains the check valve assembly (30) within its body (14) such that a unitary check valve (10) is provided.

11. A check valve (10) as claimed in claim 10 wherein the retaining means (40) is a perforated sleeve passing over the spring (32) and holding it in compression when not released.

12. A check valve (10) as claimed in claim 10 wherein the retaining means (40) is released and retained by bayonet fittings.

13. A check valve (10) as claimed in any one of claims 1 to 9 wherein the check valve (10) and the spray nozzle (20) can be connected and disconnected to each other without interfering with the check valve (10).

14. A check valve (10) as claimed in claim 13 wherein fluid flows through the check valve (10) in a path over the guide means (34) and valve member (34) through the perforated sleeve (40) and spring (32) in a generally axial direction to the spray nozzle (20).

15. A check valve (10) as claimed in any one of claims 1 to 14 wherein at least one air passage passes through the body (14) of the valve (10) such that air is entrained into the fluid flow at the spray nozzle end of the body (14) when fluid is flowing through it.

## Patentansprüche

1. Sperrventil für eine Sprühdüsen- bzw. Sprühkopfanordnung, welches ein Gehäuse (14) aufweist, das an einem Ende (12) zur Aufnahme einer Flüssigkeitsquelle und an dem anderen Ende zum Eingriff mit einer Sprühdüse (20) einer Sprühdüsenanordnung ausgelegt ist und welches eine Bohrung (11) aufweist, wobei die Bohrung (11) einen ersten Abschnitt (16) benachbart dem stromaufwärts gelegenen bzw. zulaufseitigen Ende des Gehäuses (14) aufweist, wobei der erste Abschnitt (16) einen kleineren Durchmesser als ein zweiter stromabwärts gelegener Abschnitt (17) aufweist, so dass ein Ventilsitz (18) an dem Übergang dieser Abschnitte bereitgestellt wird, sowie eine Ventilanordnung (30), welche üblicherweise in dem zweiten Abschnitt (17) angeordnet ist und ein Ventilbauteil (31) mit einem im Allgemeinen gekrümmten Ende (33), das auf den Ventilsitz (18) gerichtet ist, sowie eine Vorspannvorrichtung (32) zum normalen Halten des Ventilbauteils (31) gegen den Ventilsitz (18) aufweist, bis der Druck an dem Einlass einen vorher festgelegten Mindestwert erreicht, **dadurch gekennzeichnet, dass** das Sperrventil des Weiteren eine um die Vorspannvorrichtung herum angeordnete lösbare Haltevorrichtung aufweist, welche die Sperrventilanordnung (30) in ihrem Gehäuse (14) zurückhält, so dass ein einheitliches bzw. einteiliges Sperrventil bereitgestellt wird, wodurch bei Verwendung des Sperrventils (10) in einer Sprühdüsenanordnung das Sperrventil (10) von der Sprühdüse entfernt werden kann, ohne dass das Sperrventil (10) zerstört wird.

2. Sperrventil (10) nach Anspruch 1, **dadurch gekennzeichnet, dass** das gekrümmte Ende (33) des Ventilbauteils (31) im Allgemeinen halbkugelförmig ist.

3. Sperrventil (10) nach Anspruch 1, **dadurch gekennzeichnet, dass** das gekrümmte Ende (33) des Ventilbauteils (31) im Allgemeinen konisch ausgebildet ist.

4. Sperrventil (10) nach einem der Ansprüche 1 bis 3, **dadurch gekennzeichnet, dass** das gekrümmte Ende (33) des Ventilbauteils (31) aus einem Opfermaterial hergestellt ist und eine Dichtung mit dem Ventilsitz (18) bildet, sobald das Ventil (10) geschlossen ist.

5. Sperrventil (10) nach Anspruch 4, **dadurch gekennzeichnet, dass** der Ventilsitz (16) kegelstumpfförmig ausgebildet ist.

6. Sperrventil (10) nach einem der Ansprüche 1 bis 4, **dadurch gekennzeichnet, dass** das Ventilbauteil (31) mit Führungseinrichtungen (34) versehen ist, um es axial in der Bohrung anzuordnen.

7. Sperrventil (10) nach Anspruch 6, **dadurch gekennzeichnet, dass** die Führungseinrichtung (34) stromaufwärts und neben dem gekrümmten Ende (32) des Ventilbauteils (31) angeordnet ist.

8. Sperrventil (10) nach Anspruch 7, **dadurch gekennzeichnet, dass** die Führungseinrichtung (34) eine Vielzahl von Armgliedern einschließt, welche sich zwischen einem axialen Bauelement der Führungseinrichtung erstrecken, um an eine Oberfläche des ersten Bohrungsbauteils (16) derart anzugrenzen, dass ein Fluidfluss über die Führungseinrichtung (34) minimal versperrt wird.

9. Sperrventil (10) nach einem der Ansprüche 1 bis 8, **dadurch gekennzeichnet, dass** die Vorspannvorrichtung (32) eine Feder ist.

10. Sperrventil (10) nach Anspruch 9, **dadurch gekennzeichnet, dass** eine lösbare Haltevorrichtung (40) bereitgestellt ist, welche die Sperrventilanordnung (30) in ihrem Gehäuse (14) hält, so dass ein einheitliches bzw. einteiliges Sperrventil (10) bereitgestellt wird.

11. Sperrventil (10) nach Anspruch 10, **dadurch gekennzeichnet, dass** die Haltevorrichtung (40) eine perforierte Hülse bzw. Siebhülse ist, welche die Feder (32) übergreift und diese bei Nichtfreigabe zusammengedrückt hält.

12. Sperrventil (10) nach Anspruch 10, **dadurch gekennzeichnet, dass** die Haltevorrichtung (40) mit Hilfe von Bayonett-Verschlüssen freigegeben und gehalten bzw. fixiert wird.

13. Sperrventil (10) nach einem der Ansprüche 1 bis 9, **dadurch gekennzeichnet, dass** das Sperrventil (10) und die Sprühdüse (20) miteinander verbunden und voneinander
getrennt werden können, ohne dass das Sperrventil (10) gestört oder beeinträchtigt wird.

14. Sperrventil (10) nach Anspruch 13, **dadurch gekennzeichnet, dass** ein Fluid durch das Sperrventil (10) in einem Weg über die Führungseinrichtung (34) und das Ventilbauteil (34) durch die Siebhülse (40) und die Feder (32) in einer im Allgemeinen axialen Richtung zu der Sprühdüse (20) fließt.

15. Sperrventil (10) nach einem der Ansprüche 1 bis 14, **dadurch gekennzeichnet, dass** mindestens ein Luftkanal durch das Gehäuse (14) des Ventils (10) verläuft, so dass Luft in dem Fluidstrom an dem Sprühdüsenende des Gehäuses (14) mitgeführt bzw. mitgerissen wird, wenn ein Fluid hindurchströmt.

## Revendications

1. Vanne anti-retour (10) pour un ensemble de buse de pulvérisation comprenant un corps (14) adapté à une extrémité (12) pour recevoir une source de liquide et à l'autre extrémité pour venir en prise avec une buse de pulvérisation (20) d'un ensemble de buse de pulvérisation et ayant un perçage (11) à travers celui-ci, ledit perçage (11) ayant une première section (16) adjacente à l'extrémité amont du corps (14), ladite première section (16) ayant un plus petit diamètre qu'une deuxième section aval (17) de sorte qu'un siège de vanne (18) est réalisé à la jonction de ces sections, un ensemble de vanne (30) situé généralement dans la deuxième section (17) et ayant un élément de vanne (31) ayant une extrémité généralement courbée (33) dirigée vers le siège (18) et un moyen de sollicitation (32) pour tenir normalement l'élément (31) contre le siège (18) jusqu'à ce que la pression à l'entrée atteigne un minimum prédéterminé, **caractérisée en ce que** ladite vanne anti-retour (10) comprend en outre un moyen de retenue relâchable situé autour du moyen de sollicitation (32) qui retient l'ensemble de vanne anti-retour (30) dans son corps (14) de sorte qu'une vanne anti-retour unitaire est réalisée, moyennant quoi, en cours d'utilisation de la vanne anti-retour (10) dans un ensemble de buse de pulvérisation, la vanne anti-retour (10) peut être retirée de la buse de pulvérisation sans rompre la vanne anti-retour (10).

2. Vanne anti-retour (10) selon la revendication 1, dans laquelle l'extrémité courbée (33) de l'élément de vanne (31) a une forme généralement hémisphérique.

3. Vanne anti-retour (10) selon la revendication 1, dans laquelle l'extrémité courbée (33) de l'élément de vanne (31) a une forme généralement conique.

4. Vanne anti-retour (10) selon l'une quelconque des revendications 1 à 3, dans laquelle l'extrémité courbée (33) de l'élément de vanne (31) est fabriquée en un matériau sacrificiel et forme un joint avec le siège de vanne (18) lorsque la vanne (10) est fermée.

5. Vanne anti-retour (10) selon la revendication 4, dans laquelle le siège de vanne (16) a la forme d'un cône tronqué.

6. Vanne anti-retour (10) selon l'une quelconque des revendications 1 à 4, dans laquelle l'élément de vanne (31) est muni d'un moyen de guidage (34) pour le localiser axialement dans le perçage.

7. Vanne anti-retour (10) selon la revendication 6, dans laquelle le moyen de guidage (34) est positionné en amont de et adjacente à l'extrémité courbée (32) de l'élément de vanne (31).

8. Vanne anti-retour (10) selon la revendication 7, dans laquelle le moyen de guidage (34) comporte plusieurs éléments de bras s'étendant entre un composant axial du moyen de guidage pour buter contre une surface du premier élément de perçage (16) de sorte qu'un écoulement de fluide sur le moyen de guidage (34) est obstruit minimalement.

9. Vanne anti-retour (10) selon l'une quelconque des revendications 1 à 8, dans laquelle le moyen de sollicitation (32) est un ressort.

10. Vanne anti-retour (10) selon la revendication 9, dans laquelle un moyen de retenue relâchable (40) est réalisé qui retient l'ensemble de vanne anti-retour (30) dans son corps (14) de sorte qu'une vanne anti-retour unitaire (10) est réalisée.

11. Vanne anti-retour (10) selon la revendication 10, dans laquelle le moyen de retenue (40) est un manchon perforé passant sur le ressort (32) et le maintenant en compression lorsqu'il n'est pas libéré.

12. Vanne anti-retour (10) selon la revendication 10, dans laquelle le moyen de retenue (40) est relâché et retenu par des verrous à baïonnette.

13. Vanne anti-retour (10) selon l'une quelconque des revendications 1 à 9, dans laquelle la vanne anti-retour (10) et la buse de pulvérisation (20) peuvent être connectées et déconnectées entre elles sans interférer avec la vanne anti-retour (10).

14. Vanne anti-retour (10) selon la revendication 13, dans laquelle le fluide s'écoule à travers la vanne anti-retour (10) selon un chemin sur le moyen de guidage (34) et l'élément de vanne (31) à travers le manchon perforé (40) et le ressort (32) dans une direction généralement axiale à la buse de pulvérisation (20).

15. Vanne anti-retour (10) selon l'une quelconque des revendications 1 à 14, dans laquelle au moins un passage d'air passe à travers le corps (14) de la vanne (10) de telle sorte que l'air est entraîné dans l'écoulement de fluide à l'extrémité de la buse de pulvérisation du corps (14) lorsque le fluide s'écoule à travers celle-ci.
